(19) Europäisches Patentamt
European Patent Office
Office européen des brevets

(11) **EP 4 744 990 A1**

(12) **EUROPEAN PATENT APPLICATION**
published in accordance with Art. 153(4) EPC

(43) Date of publication:
**20.05.2026 Bulletin 2026/21**

(21) Application number: **24842965.6**

(22) Date of filing: **04.07.2024**

(51) International Patent Classification (IPC):
**B60W 30/02** (2012.01)    **B60W 40/10** (2012.01)
**B60W 40/12** (2012.01)    **B62D 53/00** (2006.01)

(52) Cooperative Patent Classification (CPC):
**B60W 30/02; B60W 40/10; B60W 40/12;**
**B62D 53/00**

(86) International application number:
**PCT/JP2024/024310**

(87) International publication number:
**WO 2025/018172 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 JP 2023116023**

(71) Applicant: **JTEKT CORPORATION**
**Kariya-shi, Aichi 448-8652 (JP)**

(72) Inventors:
• **TAMAIZUMI, Terutaka**
**Kariya-shi, Aichi 448-8652 (JP)**
• **TAMAKI, Hiromasa**
**Kariya-shi, Aichi 448-8652 (JP)**
• **NITTA, Nobuhiro**
**Tokyo 103-0022 (JP)**

(74) Representative: **Winter, Brandl - Partnerschaft mbB**
**Alois-Steinecker-Straße 22**
**85354 Freising (DE)**

(54) **VEHICLE CONTROL DEVICE, VEHICLE CONTROL METHOD, AND VEHICLE CONTROL PROGRAM**

(57)    A control device (80, 90) is configured to execute a towing information acquisition process and a towing process. The towing information acquisition process is a process of acquiring information regarding whether the tractor is towing a trailer. The towing process is a process of operating an operation target in accordance with a value of an operation input variable determined so as to attenuate a yaw response of the vehicle to a turning instruction operation when the tractor is towing the trailer compared to when the tractor is not towing the trailer. The operation target is at least one of the following three systems: a steering system, a drive system, and a braking system. The operation input variable is a variable that determines an input signal to the operation target.

Fig.2

EP 4 744 990 A1

## Description

TECHNICAL FIELD

The present disclosure relates to vehicle control devices, vehicle control methods, and vehicle control programs.

BACKGROUND ART

Patent Document 1 below describes a control device for addressing a so-called sway phenomenon in which a trailer sways in an articulated vehicle. When the sway phenomenon occurs, this control device reduces the sway of the trailer through brake control.

Related Art Documents

Patent Documents

Patent Document 1: US Unexamined Patent Application Publication No. 2019/0001944

SUMMARY OF THE INVENTION

Problem to be Solved by the Invention

In an articulated vehicle, it is more desirable to suppress occurrence of the sway phenomenon itself as much as possible than to reduce the sway of the trailer after the sway phenomenon has occurred.

Means for Solving the Problem

One aspect of the present disclosure provides a vehicle control device. The control device is configured to control a vehicle equipped with a tractor. The control device is configured to execute a towing information acquisition process and a towing process. The towing information acquisition process is a process of acquiring information regarding whether the tractor is towing a trailer. The towing process is a process of operating an operation target in accordance with a value of an operation input variable determined so as to attenuate a yaw response of the vehicle to a turning instruction operation when the tractor is towing the trailer compared to when the tractor is not towing the trailer. The operation target is at least one of the following three systems: a steering system, a drive system, and a braking system. The operation input variable is a variable that determines an input signal to the operation target.

Another aspect of the present disclosure provides a vehicle control method. The control method controls a vehicle equipped with a tractor. The control method includes: executing a towing information acquisition process; and executing a towing process. The towing information acquisition process is a process of acquiring information regarding whether the tractor is towing a trailer. The towing process is a process of operating an operation target in accordance with a value of an operation input variable determined so as to attenuate a yaw response of the vehicle to a turning instruction operation when the tractor is towing the trailer compared to when the tractor is not towing the trailer. The operation target is at least one of the following three systems: a steering system, a drive system, and a braking system. The operation input variable is a variable that determines an input signal to the operation target.

Still another aspect of the present disclosure provides a vehicle control program. The control program controls a vehicle equipped with a tractor. The control program includes a command to cause a computer to execute a towing information acquisition process and a towing process. The towing information acquisition process is a process of acquiring information regarding whether the tractor is towing a trailer. The towing process is a process of operating an operation target in accordance with a value of an operation input variable determined so as to attenuate a yaw response of the vehicle to a turning instruction operation when the tractor is towing the trailer compared to when the tractor is not towing the trailer. The operation target is at least one of the following three systems: a steering system, a drive system, and a braking system. The operation input variable is a variable that determines an input signal to the operation target.

BRIEF DESCRIPTION OF THE DRAWINGS

[FIG. 1] FIG. 1 is a perspective view showing the configuration of an articulated vehicle according to a first embodiment.
[FIG. 2] FIG. 2 is a diagram showing the configuration of a control system according to the first embodiment.
[FIG. 3] FIG. 3 is a flowchart showing a sequence of processing steps executed by the control system according to the first embodiment.
[FIG. 4] FIG. 4 is a flowchart showing a sequence of processing steps executed by a steering ECU according to the first embodiment.
[FIG. 5] FIG. 5 is a flowchart showing a sequence of processing steps executed by the steering ECU according to the first embodiment.
[FIG. 6] FIG. 6 is a flowchart showing a sequence of processing steps executed by a steering ECU according to a second embodiment.
[FIG. 7] FIG. 7 is a flowchart showing a sequence of processing steps executed by an ADAS ECU according to a third embodiment.
[FIG. 8] FIG. 8 is a diagram showing the configuration of a control system according to a fourth embodiment.
[FIG. 9] FIG. 9 is a flowchart showing a sequence of processing steps executed by a steering ECU according to the fourth embodiment.

MODES FOR CARRYING OUT THE INVENTION

<First Embodiment>

A first embodiment will be described below with reference to the drawings.

"Configuration of Articulated Vehicle"

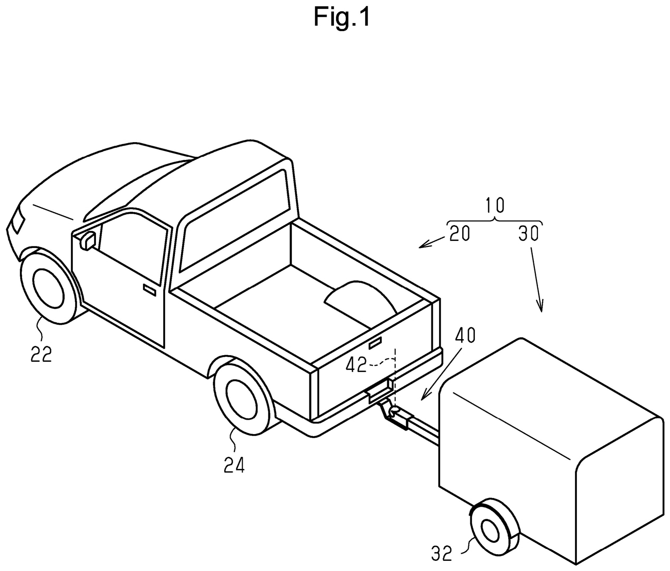

As shown in FIG. 1, an articulated vehicle 10 includes a tractor 20 and a trailer 30. The tractor 20 includes front wheels 22 and rear wheels 24. The front wheels 22 include two wheels, namely a right front wheel and a left front wheel, and the rear wheels 24 include two wheels, namely a right rear wheel and a left rear wheel. In FIG. 1, an enclosed box trailer is illustrated as the trailer 30. The trailer 30 includes wheels 32. The wheels 32 include two wheels, namely a right wheel and a left wheel.

The trailer 30 is connected to the rear of the tractor 20 via a ball joint 40. The ball joint 40 is a member that connects the trailer 30 to the tractor 20 such that the trailer 30 is rotatable about an axis 42. The axis 42 extends along the height direction of the tractor 20.

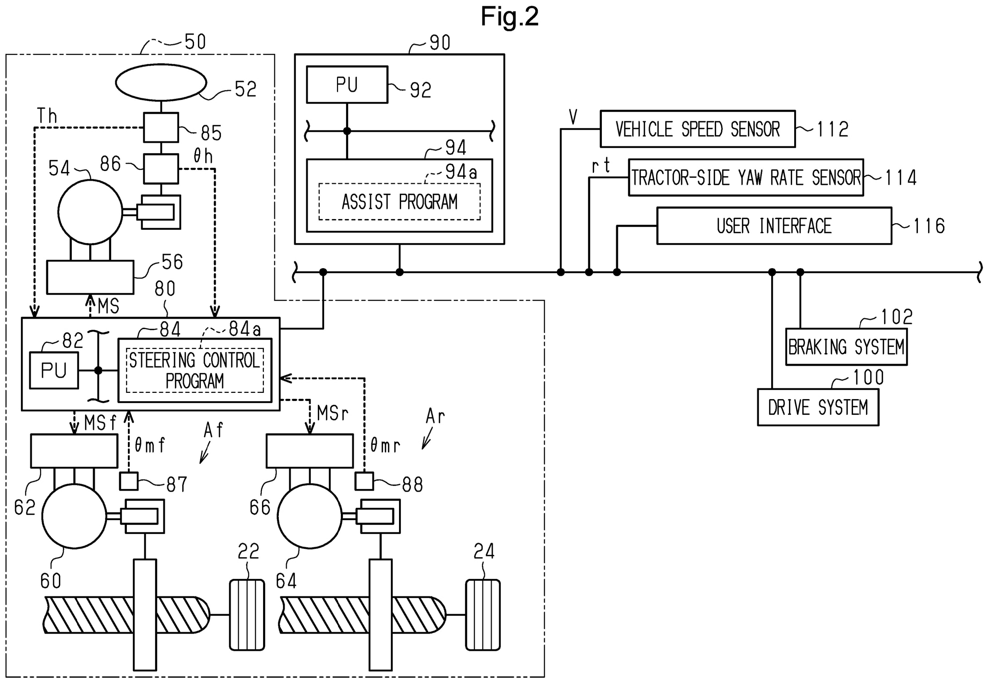

FIG. 2 illustrates part of members included in the tractor 20. As shown in FIG. 2, a reaction force from a reaction force motor 54 is applied to a steering wheel 52 in a steering system 50 included in the articulated vehicle 10. The reaction force is torque having a sign opposite to that of the torque applied to the steering wheel 52 by the driver. An output voltage of an inverter 56 is applied to terminals of the reaction force motor 54.

The steering system 50 includes a front-wheel actuator Af and a rear-wheel actuator Ar. In the front-wheel actuator Af, power from a front-wheel steering motor 60 is applied to the front wheels 22 included in the steering system 50. An output voltage of an inverter 62 is applied to terminals of the front-wheel steering motor 60. In the rear-wheel actuator Ar, power from a rear-wheel steering motor 64 is applied to the rear wheels 24 included in the steering system 50. An output voltage of an inverter 66 is applied to terminals of the rear-wheel steering motor 64.

A steering ECU 80 controls torque of the reaction force motor 54 in order to control a controlled variable of the steering wheel 52 that is a controlled object. The controlled variable is the reaction force. The steering ECU 80 also controls torque of the front-wheel steering motor 60 in order to control a controlled variable of the front wheels 22 that is a controlled object. The controlled variable is the steered angle of the front wheels 22. The steered angle is a turning angle of the tires of the front wheels 22. The steering ECU 80 controls torque of the rear-wheel steering motor 64 in order to control a controlled variable of the rear wheels 24 that is a controlled object. The controlled variable is the steered angle of the rear wheels 24.

For control of the controlled variables, the steering ECU 80 refers to steering torque Th detected by a torque sensor 85. The steering torque Th is torque input to the steering wheel 52. For control of the controlled variables, the steering ECU 80 also refers to a steering angle $\theta h$ detected by a steering angle sensor 86. For control of the controlled variables, the steering ECU 80 also refers to a rotation angle $\theta mf$ of the front-wheel steering motor 60 detected by a rotation angle sensor 87. For control of the controlled variables, the steering ECU 80 also refers to a rotation angle $\theta mr$ of the rear-wheel steering motor 64 detected by a rotation angle sensor 88.

The steering ECU 80 includes a PU 82 and a storage device 84. The PU 82 is a software processing device including at least one of a CPU, a GPU, a TPU, and the like. A steering control program 84a is stored in the storage device 84.

The tractor 20 includes a drive system 100. The drive system 100 includes at least one of the following two devices as a thrust generation device of the vehicle: an internal combustion engine, and a rotating electrical machine. The tractor 20 includes a braking system 102. The braking system 102 includes at least one of the following two devices: a device that reduces the speed of rotation of the wheels by frictional force, and a device that reduces the speed of rotation of the wheels by converting the power of the wheels into electrical energy. The device that reduces the speed of rotation of the wheels by the conversion into electrical energy may be shared with the rotating electrical machine of the drive system.

The tractor 20 includes an ADAS ECU 90. The ADAS ECU 90 operates the steering system 50, the drive system 100, and the braking system 102 in order to control controlled variables of the articulated vehicle 10 that is a controlled object. The controlled variables include vehicle speed and direction of travel. The drive system 100 may include a drive control device that controls the internal combustion engine and the rotating electrical machine. In this case, "the ADAS ECU 90 operates the drive system 100" means that the ADAS ECU 90 outputs command signals to the drive control device. The braking system 102 may include a brake control device that controls a device that reduces the speed of rotation of the wheels. In this case, "the ADAS ECU 90 operates the braking system 102" means that the ADAS ECU 90 outputs command signals to the brake control device. Also, "the ADAS ECU 90 operates the steering system 50" means that the ADAS ECU 90 outputs command signals to the steering ECU 80.

The ADAS ECU 90 refers to a vehicle speed V detected by a vehicle speed sensor 112. The ADAS ECU 90 also refers to a tractor yaw rate rt detected by a tractor-side yaw rate sensor 114 in order to control the controlled variables. The ADAS ECU 90 is capable of communicating with a user interface 116. The user interface 116 is an interface through which information from the driver is input. The input of information from the driver includes input of the driver's intention. The input of the driver's intention includes input of whether the driver desires automatic steering or manual steering. The input of information from the driver also includes input of information regarding the trailer 30.

The ADAS ECU 90 includes a PU 92 and a storage device 94. The PU 92 is a software processing device including at least one of a CPU, a GPU, a TPU, and the like. An assist program 94a is stored in the storage device 94. The assist program 94a defines commands to execute an automatic steering process and the like.

"Process for Grasping Trailer State"

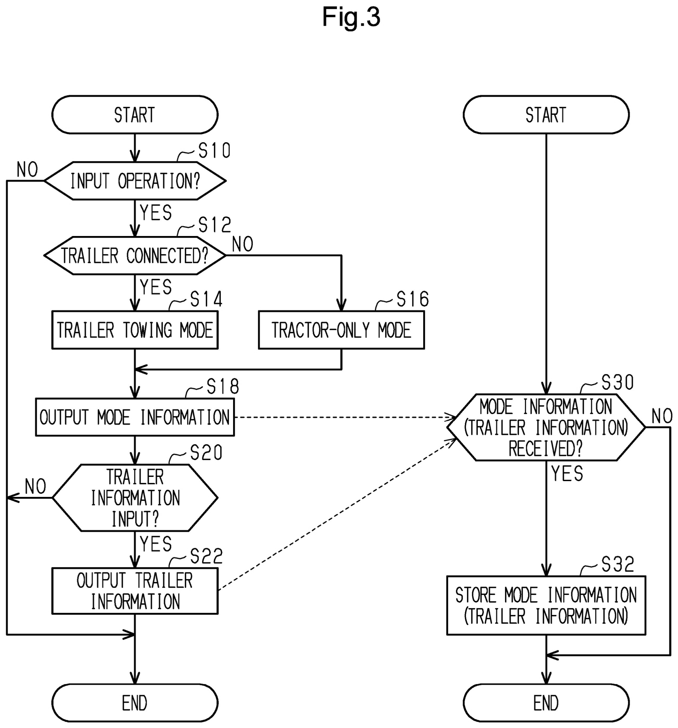

FIG. 3 shows a sequence of processing steps for grasping the state of the trailer. The process shown in FIG. 3 is executed while the ADAS ECU 90 and the steering ECU 80 communicate with each other. Specifically, the processing on the left side of FIG. 3 is implemented by the PU 92 of the ADAS ECU 90 repeatedly executing the assist program 94a at, for example, a predetermined cycle. The processing on the right side of FIG. 3 is implemented by the PU 82 of the steering ECU 80 repeatedly executing the steering control program 84a at, for example, a predetermined cycle. In the following description, step numbers in the process are denoted by numerals preceded by "S."

In the series of steps shown in FIG. 3, the PU 92 first determines whether an input operation has been performed via the user interface 116 regarding whether the trailer 30 is connected to the tractor (S10). When the PU 92 determines that such an input operation has been performed (S10: YES), it determines whether information indicating that the trailer 30 is connected has been input (S12). When the PU 92 determines that information indicating that the trailer 30 is connected has been input (S12: YES), it sets the travel mode to a trailer towing mode (S14). On the other hand, when the PU 92 determines that information indicating that the trailer 30 is not connected has been input (S12: NO), it sets the travel mode to a tractor-only mode (S16). When the processing of S14 or S16 is completed, the PU 92 outputs data indicating the travel mode to the steering ECU 80 (S18).

The PU 92 then determines whether trailer information has been input via the user interface 116 (S20). The trailer information includes information regarding at least one of the following three: the weight of the trailer 30, the position of the center of gravity of the trailer 30, and the length of the trailer 30. When the PU 92 determines that trailer information has been input (S20: YES), it outputs the trailer information to the steering ECU 80 (S22).

When the processing of S22 is completed, or when NO in the processing of S10 or S20, the PU 92 ends the series of steps shown on the left side of FIG. 3. On the other hand, the PU 82 of the steering ECU 80 determines whether it has received data on the travel mode output in the processing of S18 or data on the trailer information output in the processing of S22 (S30). When the PU 82 determines that it has received such data (S30: YES), it stores the received data in the storage device 84 (S32).

When the processing of S32 is completed, or when NO in the processing of S30, the PU 82 ends the series of steps shown on the right side of FIG. 3. The processing of S10 to S12 corresponds to the towing information acquisition process. The processing of S20 corresponds to the trailer information acquisition process.

"Countermeasures Against Sway Phenomenon"

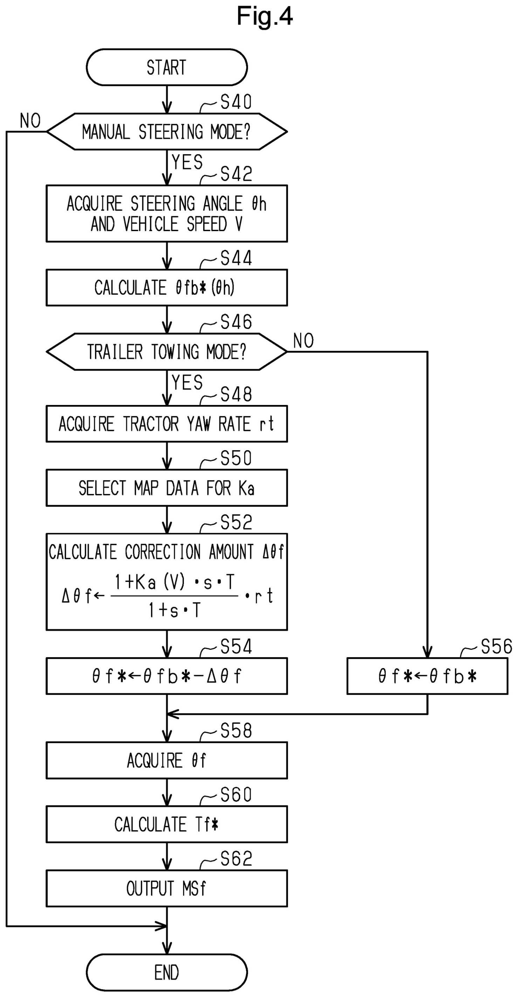

FIG. 4 shows a sequence of processing steps for suppressing occurrence of the sway phenomenon. The series of steps shown in FIG. 4 is implemented by the PU 82 repeatedly executing the steering control program 84a at, for example, a predetermined cycle.

In the series of steps shown in FIG. 4, the PU 82 first determines whether the vehicle is in a manual steering mode (S40). When the PU 82 determines that the vehicle is in the manual steering mode (S40: YES), it acquires the steering angle $\theta h$ detected by the steering angle sensor 86 and the vehicle speed V detected by the vehicle speed sensor 112 (S42). Based on the steering angle $\theta h$, the PU 82 calculates a target front-wheel steered angle base value $\theta fb^*$ (S44). The target front-wheel steered angle base value $\theta fb^*$ is a base value of a target steered angle of the front wheels 22. The PU 82 sets the target front-wheel steered angle base value $\theta fb^*$ to a value having a positive correlation with the steering angle $\theta h$.

The PU 82 then determines whether the vehicle is in the trailer towing mode (S46). When the PU 82 determines that the vehicle is in the trailer towing mode (S46: YES), it acquires the tractor yaw rate rt (S48). Based on the trailer information, the PU 82 then selects map data for determining a coefficient Ka (S50). The map data is data in which the vehicle speed V is an input variable and the coefficient Ka is an output variable.

The PU 52 obtains, as an output, a correction amount $\Delta\theta f$ by inputting the tractor yaw rate rt into the following phase lead compensation filter defined by the coefficient Ka (S52).

$$(1 + Ka \cdot s \cdot T)/(1 + s \cdot T)$$

A Laplace operator s and a time constant T are used in the above expression. The coefficient Ka in the above expression is calculated by the PU 82 using a map in accordance with the vehicle speed V.

The map data is a data set of discrete values of the input variable and values of the output variable corresponding to the values of the input variable. The map calculation may be any process as long as, when the value of the input variable matches one of the input variable values in the map data, the calculation result is the corresponding output variable value of the map data. Alternatively, the map calculation may be any process as long as, when the value of the input variable does not match any of the input variable values in the map data, the calculation result is a value obtained by interpolation of multiple output variable values included in the map data. Alternatively, the map calculation may be a process in which, when the value of the input variable does not match any of the input variable values in the map data, the calculation result is the output variable value of the map data corresponding to the input variable value that is closest to this value of the input variable among the input variable values included in the map data.

The PU 82 then substitutes, for the target front-wheel steered angle $\theta f^*$, a value obtained by subtracting the correction amount $\Delta \theta f$ from the target front-wheel steered angle base value $\theta fb^*$ (S54). On the other hand, when the PU 82 determines that the vehicle is in the tractor-only mode (S46: NO), it substitutes the target front-wheel steered angle base value $\theta fb^*$ for the target front-wheel steered angle $\theta f^*$ (S56).

When the processing of S54 or S56 is completed, the PU 82 acquires a front-wheel steered angle $\theta f$ (S58). The front-wheel steered angle $\theta f$ is calculated by the PU 82 based on the rotation angle $\theta mf$. The PU 82 calculates a manipulated variable of feedback control in which the front-wheel steered angle $\theta f$ is a controlled variable and the target front-wheel steered angle $\theta f^*$ is a target value of the controlled variable, and substitutes this manipulated variable for target front-wheel torque $Tf^*$ (S60). The PU 82 then outputs to the inverter 62 an operation signal MSf corresponding to the target front-wheel torque $Tf^*$, thereby operating the inverter 62 (S62). When the target front-wheel torque $Tf^*$ is a value converted into the torque of the front-wheel steering motor 60, the operation signal MSf is a signal for bringing the torque of the front-wheel steering motor 60 closer to the target front-wheel torque $Tf^*$.

When the processing of S62 is completed, or when NO in the processing of S40, the PU 82 ends the series of steps shown in FIG. 4. The processing of S46 to S54 and S58 to S62 corresponds to the towing process. The processing of S44 corresponds to the base target value setting process. The processing of S48 corresponds to the yaw rate acquisition process. The processing of S52 corresponds to the phase lead compensation process.

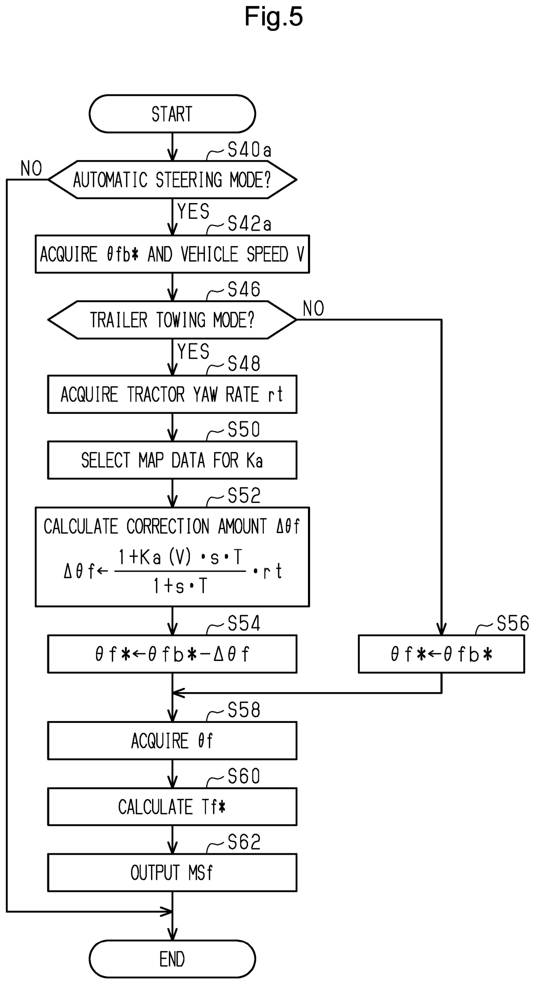

FIG. 5 shows a sequence of processing steps for suppressing occurrence of the sway phenomenon. The series of steps shown in FIG. 5 is implemented by the PU 82 repeatedly executing the steering control program 84a at, for example, a predetermined cycle. In FIG. 5, the steps corresponding to those in FIG. 4 are denoted by the same step numbers for convenience.

In the series of steps shown in FIG. 5, the PU 82 first determines whether the vehicle is in an automatic steering mode (S40a). When the PU 82 determines that the vehicle is in the automatic steering mode (S40a: YES), it acquires the target front-wheel steered angle base value $\theta fb^*$ and the vehicle speed V (S42a). The target front-wheel steered angle base value $\theta fb^*$ is a value set by the ADAS ECU 90. The PU 92 of the ADAS ECU 90 executes the assist program 94a to set a travel trajectory of the tractor 20, and then substitutes, for the target front-wheel steered angle base value $\theta fb^*$, the steered angle of the front wheels 22 appropriate for causing the tractor 20 to travel along the trajectory. Here, "appropriate for causing the tractor 20 to travel along the trajectory" means appropriate when the travel mode is the tractor-only mode.

When the processing of S42a is completed, the PU 82 executes the processing of S46 to S62. The processing of S46 to S54 and S58 to S62 corresponds to the towing process. The processing of S42a corresponds to the base target value setting process.

"Functions and Effects of Embodiment"

In the manual steering mode, the PU 82 sets the target front-wheel steered angle base value $\theta fb^*$ in accordance with the steering angle $\theta h$. When the vehicle is in the tractor-only mode, the PU 82 substitutes the target front-wheel steered angle base value $\theta fb^*$ for the target front-wheel steered angle $\theta f^*$. On the other hand, when the vehicle is in the trailer towing mode, the PU 82 substitutes, for the target front-wheel steered angle $\theta f^*$, a value obtained by subtracting the correction amount $\Delta \theta f$ from the target front-wheel steered angle base value $\theta fb^*$. Since the correction amount $\Delta \theta f$ is an output value of the phase lead compensation filter with the tractor yaw rate rt as the input, it has a positive correlation with the tractor yaw rate rt. Accordingly, the target front-wheel steered angle $\theta f^*$ in the trailer towing mode is set to a value that reduces the absolute value of the tractor yaw rate rt compared to the target front-wheel steered angle base value $\theta fb^*$.

Generally, when the tractor 20 is towing the trailer 30, the absolute value of the yaw rate tends to increase even during the same turning operation, compared to when the tractor 20 is not towing the trailer 30. That is, even when the steering wheel 52 is operated in the same manner in the trailer towing mode and in the tractor-only mode, the yaw response of the articulated vehicle 10 tends to be greater in the trailer towing mode. An increase in the absolute value of the yaw rate is a factor that causes the sway phenomenon.

In contrast, the use of the correction amount $\Delta \theta f$ reduces the likelihood that the yaw response becomes greater in the trailer towing mode when the steering wheel 52 is operated in the same manner in the above two modes.

In the automatic steering mode, the use of the correction amount $\Delta \theta f$ reduces the likelihood that the yaw response becomes greater in the trailer towing mode when the curvature of the target travel trajectory of the tractor 20 is the same in the above two modes.

The present embodiment described above further has the following functions and effects.

(1-1) The correction amount Δθf is calculated using a phase lead compensation filter. Therefore, a correction amount that functions in the same manner as a damping correction amount obtained by multiplying a time derivative of the tractor yaw rate rt by a gain can be obtained without using differentiation.

(1-2) The likelihood of the sway phenomenon occurring varies depending on the vehicle speed V. Therefore, the PU 82 set the coefficient Ka in accordance with the vehicle speed V. The target front-wheel steered angle θf* can thus be set to a value appropriate for suppressing the sway phenomenon, while minimizing the difference between the target front-wheel steered angle base value θfb* and the target front-wheel steered angle θf*.

(1-3) The likelihood of the sway phenomenon occurring varies depending on the specifications of the trailer 30 and the state of the trailer 30. Therefore, the PU 82 set the coefficient Ka in accordance with the trailer information. The target front-wheel steered angle θf* can thus be set to a value appropriate for suppressing the sway phenomenon, while minimizing the difference between the target front-wheel steered angle base value θfb* and the target front-wheel steered angle θf*.

<Second Embodiment>

Hereinafter, a second embodiment will be described with reference to the drawings, focusing on differences from the first embodiment.

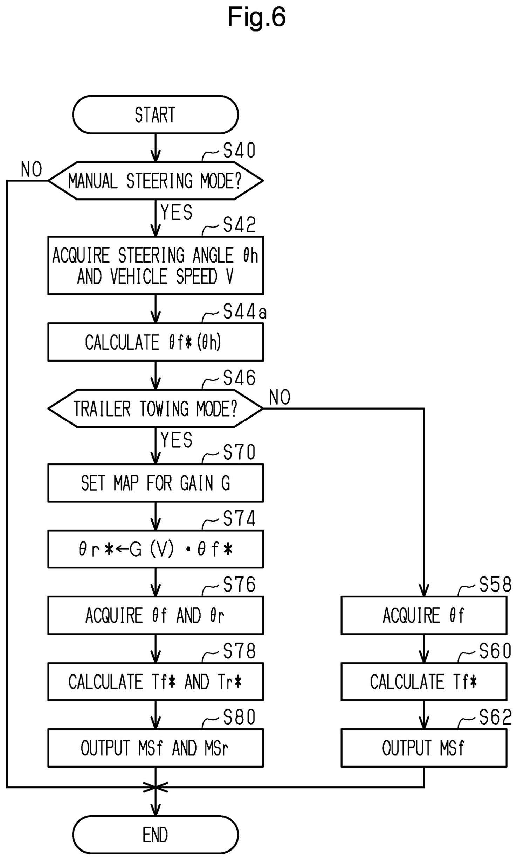

FIG. 6 shows a sequence of processing steps for suppressing occurrence of the sway phenomenon according to the present embodiment. The series of steps shown in FIG. 6 is implemented by the PU 82 repeatedly executing the steering control program 84a at, for example, a predetermined cycle. In FIG. 6, the steps corresponding to those in FIG. 4 are denoted by the same step numbers for convenience.

In the series of steps shown in FIG. 6, when the processing of S42 is completed, the PU 82 calculates the target front-wheel steered angle θf* based on the steering angle θh (S44a). The PU 82 then determines whether the vehicle is in the trailer towing mode (S46). When the PU 82 determines that the vehicle is in the tractor-only mode (S46: NO), it executes the processing of S58 to S62.

On the other hand, when the PU 82 determines that the vehicle is in the trailer towing mode (S46: YES), it selects map data for setting a gain G, described below, in accordance with the trailer information (S70). The map data is data in which the vehicle speed V is an input variable and the gain G is an output variable.

The PU 82 substitutes, for a target rear-wheel steered angle θr*, a value obtained by multiplying the target front-wheel steered angle θf* by the gain G (S74). The target rear-wheel steered angle θr* is a target value of the steered angle of the rear wheels 24 of the tractor 20. The gain G is calculated by the PU 82 using a map based on the map data described above. The gain G is set to a value that makes the sideslip angle β of the tractor 20 zero. The gain G may be calculated by setting the sideslip angle β to zero in a vehicle model such as a two-wheel model.

The PU 82 calculates the front-wheel steered angle θf and the rear-wheel steered angle θr (S76). The rear-wheel steered angle θr is calculated by the PU 82 using the rotation angle θmr. The PU 82 calculates target front-wheel torque Tf* and target rear-wheel torque Tr* (S78). The PU 82 calculates the target front-wheel torque Tf* by the process described above. The PU 82 calculates a manipulated variable of feedback control in which the rear-wheel steered angle θr is a controlled variable and the target rear-wheel steered angle θr* is a target value of the controlled variable, and substitutes this manipulated variable for the target rear-wheel torque Tr*.

The PU 82 then outputs an operation signal MSf to the inverter 62 and outputs an operation signal MSr to the inverter 66 (S80). When the target rear-wheel torque Tr* is a value converted into the torque of the rear-wheel steering motor 64, the operation signal MSr is a signal for bringing the torque of the rear-wheel steering motor 64 closer to the target rear-wheel torque Tr*.

When the processing of S62 or S80 is completed, or when NO in the processing of S40, the PU 82 ends the series of steps shown in FIG. 6. The processing of S70 to S80 corresponds to the towing process.

In the automatic steering mode, the PU 82 executes a process in which the processing of S42 and S44a in the process of FIG. 6 is replaced with the processing of S42a.

"Functions and Effects of Embodiment"

The PU 82 sets the target rear-wheel steered angle θr* in accordance with the target front-wheel steered angle θf*. The target rear-wheel steered angle θr* is a manipulated variable of open-loop control for controlling the sideslip angle β to zero. Therefore, in the manual steering mode, the yaw response is less likely to become greater in the trailer towing mode when the steering wheel 52 is operated in the same manner in the trailer towing mode and in a mode other than the trailer towing mode. In the automatic steering mode, the yaw response is less likely to become greater in the trailer towing mode when the curvature of the target travel trajectory of the tractor 20 is the same in the trailer towing mode and in a mode other than the trailer towing mode.

<Third Embodiment>

Hereinafter, a third embodiment will be described with reference to the drawings, focusing on differences from the first embodiment.

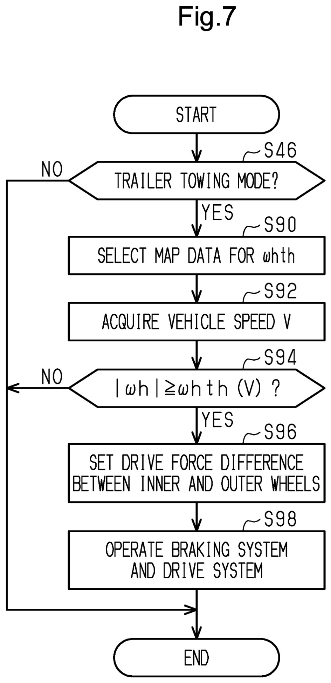

In the present embodiment, in the trailer towing mode, the yaw response is attenuated using the drive system 100 and the braking system 102. FIG. 7 shows a sequence of processing steps for suppressing occurrence of the sway phenomenon according to the present embodiment. The series of processes shown in FIG. 7 is implemented by the PU 92 repeatedly executing the assist program 94a at, for example, a predetermined cycle.

In the series of steps shown in FIG. 7, the PU 92 first determines whether the vehicle is in the trailer towing mode (S46). When the PU 92 determines that the vehicle is in the trailer towing mode (S46: YES), it selects map data for setting a threshold $\omega$hth in accordance with the trailer information (S90). The map data is data in which the vehicle speed V is an input variable and the threshold $\omega$hth is an output variable. The PU 92 acquires the vehicle speed V (S92).

The PU 92 then determines whether the absolute value of a steering speed wh is greater than or equal to the threshold $\omega$hth (S94). This process is a process of determining whether a condition for executing a process of attenuating the yaw response is satisfied. The threshold $\omega$hth is set to the lower limit of the absolute value of the steering speed wh at which the sway phenomenon tends to occur. The PU 92 changes the threshold $\omega$hth in accordance with the vehicle speed V under the condition that the threshold $\omega$hth when the vehicle speed V is large is less than or equal to the threshold $\omega$hth when the vehicle speed V is small. Specifically, the threshold $\omega$hth is calculated by the PU 92 using a map based on the map data selected by the processing of S90.

In the description "changing B in accordance with A under the condition that B when A is large is less than or equal to B when A is small," the expressions "when A is large" and "when A is small" mean a relative magnitude relationship when comparing the two. For example, "when A is large" corresponds to "when A is a first value," and "when A is small" corresponds to "when A is a second value smaller than the first value." This means that, according to the above process, depending on the settings of the first value and the second value, B when A is the first value may be smaller than B when A is the second value.

When the PU 92 determines that the absolute value of the steering speed wh is greater than or equal to the threshold $\omega$hth (S94: YES), it sets a drive force difference between the inner wheel and the outer wheel (S96). This process is a process of attenuating the yaw response by applying a yaw moment in the direction opposite to the turning direction during turning. This process is a process of reducing the magnitude of the drive force of the outer wheel relative to the drive force of the inner wheel.

The PU 92 operates the drive system 100 and the braking system 102 so as to generate the drive force difference set by the processing of S96 (S98). For example, the PU 92 operates the braking system 102 to apply a braking force to the outer wheel and operates the drive system 100 to compensate for a decrease in output due to the braking force. However, in a case where the drive system 100 can change the distribution of the drive force to each wheel, the function of the drive system 100 is not limited to compensating for a total output decrease. For example, in addition to the process of applying a braking force to the outer wheel by the braking system 102, the PU 92 may execute a process of reducing the drive force of the outer wheel relative to the drive force of the inner wheel by the drive system 100.

The processing of S96 does not mean a process of making the drive force of the outer wheel smaller than the drive force of the inner wheel. The processing of S96 is a process of making the magnitude of the drive force of the outer wheel relative to the drive force of the inner wheel smaller than the value in the tractor-only mode.

When the processing of S98 is completed, or when NO in the processing of S46 or S94, the PU 92 ends the series of steps shown in FIG. 7.

"Functions and Effects of Embodiment"

When, in the trailer towing mode, the absolute value of the steering speed wh becomes greater than or equal to the threshold $\omega$hth, the PU 92 superimposes a yaw moment in the direction opposite to the turning direction by operating the drive system 100 and the braking system 102. In other words, the PU 92 controls, to a quantity in the opposite direction to the yaw moment in the tractor-only mode, a value obtained by subtracting the yaw moment in the trailer towing mode from the yaw moment in the tractor-only mode. Accordingly, the yaw response is less likely to become greater in the trailer towing mode when the turning operation instruction is the same in the trailer towing mode and in the tractor-only mode.

<Fourth Embodiment>

A fourth embodiment will be described below with reference to the drawings, focusing on differences from the first embodiment.

"Configuration of Articulated Vehicle"

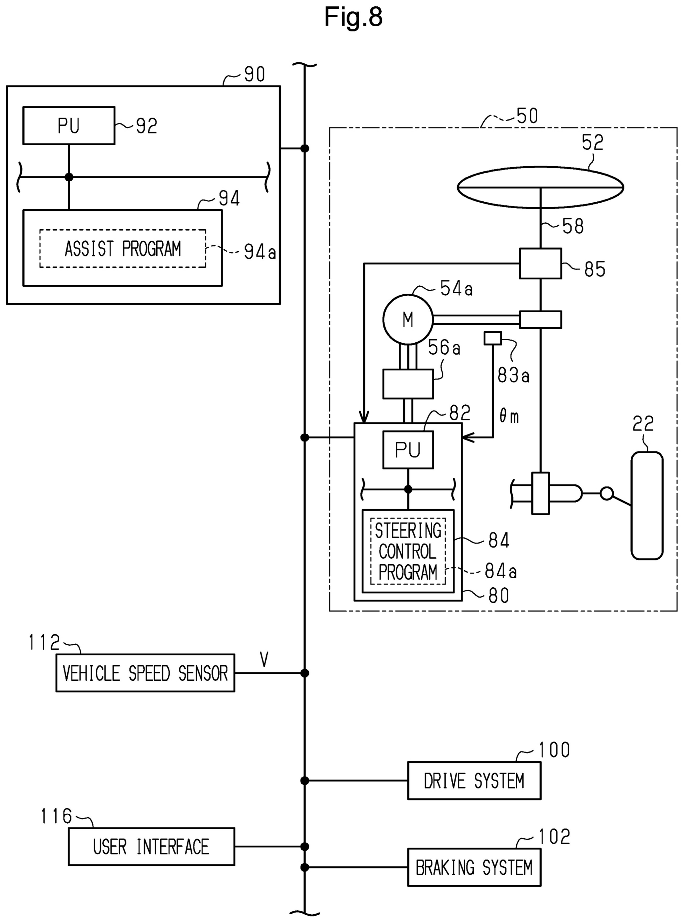

FIG. 8 illustrates part of members included in the tractor 20. In FIG. 8, the members corresponding to those shown in FIG. 2 are denoted by the same signs for convenience.

As shown in FIG. 8, the steering wheel 52 of the steering system 50 is capable of transmitting power to the front wheels 22 via a steering shaft 58. Torque of an assist motor 54a is applied to the steering shaft 58. An output voltage of an inverter 56a is applied to each terminal of the assist motor 54a. The inverter 56a is operated by the steering ECU 80. The steering ECU 80 refers to a rotation angle θm of the assist motor 54a detected by a rotation angle sensor 83a.

"Countermeasures Against Sway Phenomenon"

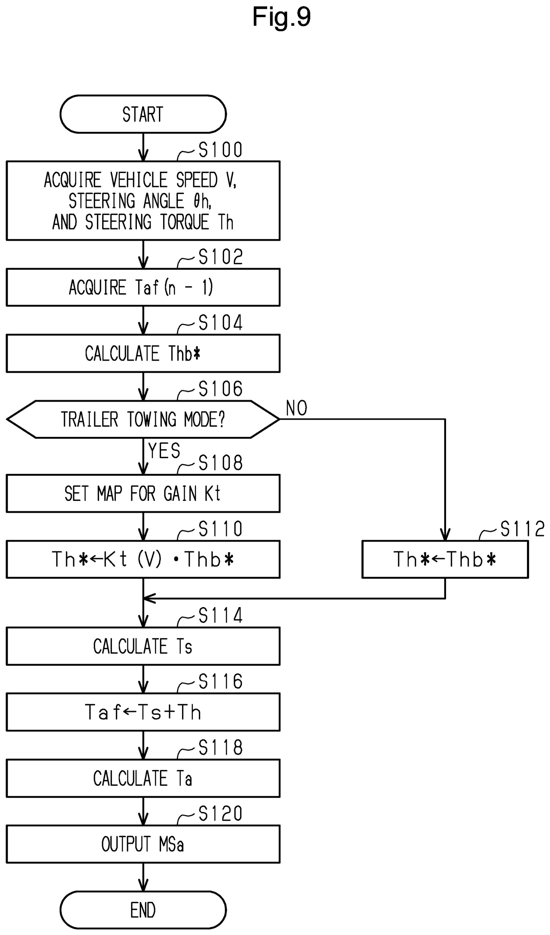

FIG. 9 shows a sequence of processing steps for suppressing occurrence of the sway phenomenon. The series of steps shown in FIG. 9 is implemented by the PU 82 repeatedly executing the steering control program 84a at, for example, a predetermined cycle.

In the series of steps shown in FIG. 9, the PU 82 first acquires the vehicle speed V, the steering angle θh, and the steering torque Th (S100). The steering angle θh is calculated by the PU 82 based on the rotation angle θm. Next, the PU 82 acquires a previous value of an axial force Taf calculated by the processing of S116 described below (S102).

The PU 82 then calculates a target steering torque base value Thb* in accordance with the previous value of the axial force Taf and the vehicle speed V (S104). For example, the PU 82 may change the target steering torque base value Thb* in accordance with the axial force Taf under the condition that the target steering torque base value Thb* when the axial force Taf is large is greater than or equal to the target steering torque base value Thb* when the axial force Taf is small. The PU 82 may change the target steering torque base value Thb* in accordance with the vehicle speed V under the condition that the target steering torque base value Thb* when the vehicle speed V is large is greater than or equal to the target steering torque base value Thb* when the vehicle speed V is small.

Specifically, the PU 82 may perform map calculation of the target steering torque base value Thb* in accordance with the axial force Taf and the vehicle speed V, with the map data stored in advance. The map data is data in which the axial force Taf and the vehicle speed V are input variables and the target steering torque base value Thb* is an output variable.

The PU 82 then determines whether the vehicle is in the trailer towing mode (S106). When the PU 82 determines that the vehicle is in the trailer towing mode (S106: YES), it selects map data for determining a gain Kt, based on the trailer information (S108). This map data is data in which the vehicle speed V is an input variable and the gain Kt is an output variable.

Thereafter, the PU 82 substitutes, for the target steering torque Th*, a value obtained by multiplying the target steering torque base value Thb* by the gain Kt (S110). The gain Kt is a value greater than "1." The PU 82 changes the gain Kt in accordance with the vehicle speed V under the condition that the gain Kt when the vehicle speed V is large is greater than or equal to the gain Kt when the vehicle speed V is small. The gain Kt is calculated by the PU 82 using a map based on the map data described above. On the other hand, when the PU 82 determines that the vehicle is in the tractor-only mode (S106: NO), it substitutes the target steering torque base value Thb* for the target steering torque Th* (S112).

When the processing of S110 or S112 is completed, the PU 82 calculates a manipulated variable Ts of feedback control in which the steering torque Th is a controlled variable and the target steering torque Th* is a target value of the controlled variable (S114). The feedback control may be the sum of an output value of a proportional element, whose input is a value obtained by subtracting the target steering torque Th* from the steering torque Th, and an output value of a differential element, whose input is the same value obtained by the subtraction. The manipulated variable Ts may include a manipulated variable of open-loop control in which the steering torque Th is a controlled variable.

The PU 82 then substitutes, for the axial force Taf, a value obtained by adding the steering torque Th to the manipulated variable Ts (S116). Thereafter, the PU 82 calculates assist torque Ta from the assist motor 54a in accordance with the axial force Taf (S118). Specifically, the PU 82 may, for example, calculate a target value of the steering angle θh in accordance with the axial force Taf using a reference model, and then calculate the assist torque Ta as a manipulated variable of feedback control in which the steering angle θh is a controlled variable. The PU 82 outputs to the inverter 56a an operation signal MSa corresponding to the assist torque Ta, thereby operating the inverter 56a (S120). When the assist torque Ta is a value converted into the torque of the front wheels 22, the operation signal MSa is a signal for bringing the torque of the assist motor 54a closer to the assist torque Ta. When the target steering torque base value Thb* is the same in the trailer towing mode and in the tractor-only mode, the absolute value of the assist torque Ta is smaller in the trailer towing mode.

When the processing of S120 is completed, the PU 82 ends the series of steps shown in FIG. 9. The processing of S108 to S120 corresponds to the towing process.

"Functions and Effects of Embodiment"

In the trailer towing mode, the PU 82 substitutes, for the target steering torque Th*, a value obtained by multiplying the target steering torque base value Thb* by the gain Kt. Accordingly, in the trailer towing mode, the PU 82 controls such that greater torque is needed for an operation of turning the steering wheel 52. On the other hand, when the steering wheel 52 is rotated equally in the trailer towing mode and in the tractor-only mode, the yaw response is greater in the trailer towing mode than in the tractor-only mode. Therefore, in the present embodiment, the yaw response is less likely to become greater in the trailer towing mode than in the tractor-only mode when the steering torque Th is the same in the trailer towing mode and in the tractor-only mode.

<Other Embodiments>

The above embodiments can be modified as follows. The above embodiments and the following modifications can be combined as long as no technical contradictions arise.

"Regarding Towing Information Acquisition Process"

- The towing information acquisition process is not limited to the process of acquiring information input via the user interface 116. For example, a camera may be provided at the rear of the tractor 20, and a process of determining the presence or absence of the trailer based on an image captured by the camera may be executed.

"Regarding Use of Trailer Information in Towing Process"

- In the processes of FIGS. 4 and 5, the PU 82 set the coefficient Ka in accordance with the trailer information. However, the present disclosure is not limited to this. For example, the PU 82 may set a time constant T in accordance with the trailer information. Alternatively, for example, the PU 82 may use, as the correction amount $\Delta\theta f$, a value obtained by multiplying the output value of the phase lead compensation process by a gain, and may set the gain in accordance with the trailer information.
- In the process of FIG. 6, the PU 82 set the map for setting the gain G in accordance with the trailer information. However, the present disclosure is not limited to this. For example, the PU 82 may set a second gain G2 in accordance with the trailer information, and may substitute, for the target rear-wheel steered angle $\theta r^*$, a value obtained by multiplying the target front-wheel steered angle $\theta f^*$ by the gain G and the gain G2. Alternatively, for example, the PU 82 may calculate the gain G using a map based on map data in which the vehicle speed V and the trailer information are input variables and the gain G is an output variable.
- In the process shown in FIG. 9, the PU 82 set the map data for determining the gain Kt in accordance with the trailer information. However, the present disclosure is not limited to this. For example, the PU 82 may set a second gain Kt2 in accordance with the trailer information, and may substitute, for the target steering torque Th*, a value obtained by multiplying the target steering torque base value Thb* by the gain Kt and the gain Kt2.
- The trailer information need not necessarily be included in the input variables for the towing process.

"Regarding Towing Process"

- In the processes of FIGS. 4 and 5, the PU 82 set the coefficient Ka in accordance with the vehicle speed V. However, the present disclosure is not limited to this. For example, the coefficient Ka may be a value set in accordance with the trailer information and independently of the vehicle speed V.
- The process in which the tractor yaw rate rt is an input and a corrected value of the target front-wheel steered angle base value $\theta fb^*$ is an output is not limited to the process using the phase lead compensation process. For example, such a process may be a process of correcting the target front-wheel steered angle base value $\theta fb^*$ by a value obtained by multiplying the time derivative of the tractor yaw rate rt by a proportional gain. In such a case, the PU 82 may set the proportional gain based on at least one of the following two: the vehicle speed V and the trailer information.
- In the process of FIG. 6, the PU 82 set the gain G in accordance with the vehicle speed V. However, the present disclosure is not limited to this. For example, the gain G may be a value set in accordance with the trailer information and independently of the vehicle speed V.
- The process in which a yaw rate is an input and a corrected value of the target front-wheel steered angle base value $\theta fb^*$ is an output is not limited to the process in which the tractor yaw rate rt alone is an input. For example, such a process may be a process in which the yaw rate of the trailer 30 is an input. Alternatively, for example, such a process may be a process in which both the tractor yaw rate rt and the yaw rate of the trailer 30 are inputs.
- In the process shown in FIG. 9, the PU 82 set the gain Kt in accordance with the vehicle speed V. However, the present disclosure is not limited to this. For example, the gain Kt may be a value set in accordance with the trailer information and independently of the vehicle speed V.
- The process of operating the steering system in accordance with the value of an operation input variable determined such that the force needed for the driver to operate the steering wheel 52 becomes greater is not limited to the process using feedback control of the steering torque Th. The process of operating the steering system in accordance with the value of the operation input variable may be a process using the following processing. Such a process is a process that executes a process in which the steering torque Th is an input and the assist torque Ta, which is a manipulated variable of open-loop control, is an output, and that operates the inverter 56a in accordance with the assist torque Ta. In such a case, the process of operating the steering system in accordance with the value of the operation input variable determined such that the force needed for the driver to operate the steering wheel 52 becomes greater may be a process of performing a correction to reduce the absolute value of the assist torque Ta.

- The process of operating the steering system in accordance with the value of the operation input variable determined such that the force needed for the driver to operate the steering wheel 52 becomes greater does not presuppose a configuration in which the steering wheel 52 and the steered wheels are connected. That is, for example, in the configuration illustrated in FIG. 2, a correction may be performed to increase the absolute value of the target steering torque Th*.

- The towing process including the process of setting the target rear-wheel steered angle $\theta r^*$, which is a value of a rear-wheel steered angle variable, in accordance with the target front-wheel steered angle $\theta f^*$, which is a value of a front-wheel steered angle variable, is not limited to the process illustrated in FIG. 6. For example, the towing process may include a process of setting a target steered angle of the trailer in addition to the target rear-wheel steered angle $\theta r^*$ in accordance with the target front-wheel steered angle $\theta f^*$. However, in such a case, it is assumed that the trailer 30 is provided with an actuator that steers the wheels 32.

- The towing process including a process of making the magnitude of the drive force of the outer wheel of the tractor 20 relative to the drive force of the inner wheel of the tractor 20 smaller than in a state in which the trailer 30 is not towed is not limited to the process described above. For example, the towing process including the above process may be a process of controlling the drive torque from the drive system 100 alone. Such a process can be implemented by changing the power distribution of the drive system 100 between the inner wheel and the outer wheel. The towing process including the above process may be a process of controlling the braking force from the braking system 102 alone.

- The process of FIG. 4 or 5, the process of FIG. 6, the process of FIG. 7, and the process of FIG. 9 need not necessarily be executed exclusively. For example, any two of the four processes, namely any two of the process of FIG. 4, the process of FIG. 6, the process of FIG. 7, and the process of FIG. 9, may be executed. Alternatively, for example, any three of the four processes, namely any three of the process of FIG. 4, the process of FIG. 6, the process of FIG. 7, and the process of FIG. 9, may be executed. Alternatively, for example, all of the process of FIG. 4, the process of FIG. 6, the process of FIG. 7, and the process of 9 may be executed. Alternatively, for example, any two of the three processes, namely any two of the process of FIG. 5, the process of FIG.

6, and the process of FIG. 7, may be executed. Alternatively, for example, all of the process of FIG. 5, the process of FIG. 6, and the process of FIG. 7 may be executed. In the above description, each of the process of FIG. 4 or 5, the process of FIG. 6, the process of FIG. 7, and the process of FIG. 9 may be replaced with a corresponding modification.

- In the process shown in FIG. 7, the PU 82 set the threshold $\omega$hth in accordance with the vehicle speed V and the trailer information. However, the present disclosure is not limited to this. For example, the PU 82 may set the threshold $\omega$hth in accordance with the trailer information alone.

"Regarding Input Unit"

- The input unit into which the driver inputs a steering intention is not limited to the steering wheel 52. For example, it may be a joystick.

"Regarding Control Device"

- Part of the processes executed by the steering ECU 80 in the above embodiments may be executed by the ADAS ECU 90.

  - The ADAS ECU 90 and the steering ECU 80 may be integrated into one unit.

- The control device is not limited to one that executes software processing. For example, the control device may include a dedicated hardware circuit such as an ASIC that executes at least part of the processes executed in the above embodiments. That is, the control device may include a processing circuit having any of the following configurations (a) to (c): (a) a processing circuit including a processing unit that executes all of the above processes in accordance with a program and a program storage device such as a storage device that stores the program, (b) a processing circuit including a processing unit and a program storage device that execute part of the above processes in accordance with a program, and a dedicated hardware circuit that executes the remaining processes, and (c) a processing circuit including a dedicated hardware circuit that executes all of the above processes. The number of software execution devices including a processing unit and a program storage device may be two or more. The number of dedicated hardware circuits may be two or more.

"Regarding Control Entity"

- For example, part of the above processes may be executed by a mobile terminal of the driver. That is, for example, the process executed by the ADAS ECU 90 in FIG. 3 and the processing of S48 to S52 may be executed by the mobile terminal.

"Others"

- For example, in the first, second, and fourth embodiments, the tractor 20 need not necessarily be provided with the rear-wheel actuator Ar.

**Claims**

1. A vehicle control device configured to control a vehicle equipped with a tractor, wherein:

    the vehicle control device is configured to execute a towing information acquisition process and a towing process;
    the towing information acquisition process is a process of acquiring information regarding whether the tractor is towing a trailer;
    the towing process is a process of operating an operation target in accordance with a value of an operation input variable determined so as to attenuate a yaw response of the vehicle to a turning instruction operation when the tractor is towing the trailer compared to when the tractor is not towing the trailer;
    the operation target is at least one of the following three systems: a steering system, a drive system, and a braking system; and
    the operation input variable is a variable that determines an input signal to the operation target.

2. The vehicle control device according to claim 1, wherein the towing process is a process of, in a manual driving mode in which the tractor is steered in accordance with a steering input by a driver, operating the operation target in accordance with a value of the operation input variable determined so as to attenuate the yaw response to the steering input.

3. The vehicle control device according to claim 1, wherein:

    the vehicle control device is configured to execute an automatic steering process; and

the towing process is a process of, during execution of the automatic steering process, operating the operation target in accordance with a value of the operation input variable determined so as to attenuate the yaw response during turning with the same curvature as a curvature when the tractor is not towing the trailer, with respect to when the tractor is not towing the trailer.

4. The vehicle control device according to claim 1, wherein the towing process includes a process of correcting a value of the operation input variable.

5. The vehicle control device according to claim 4, wherein:

    the vehicle control device is configured to execute a base target value setting process of setting a base target value, and a yaw rate acquisition process of acquiring a yaw rate;
    the base target value is a base value of a target value of a steered angle of a steered wheel; and
    the towing process includes a process of correcting the base target value with the yaw rate as an input, and a process of operating the steering system in accordance with the operation input variable that is the corrected base target value.

6. The vehicle control device according to claim 5, wherein the towing process includes a phase lead compensation process in which the yaw rate is an input, and a process of operating the steering system in accordance with the base target value corrected in accordance with an output value of the phase lead compensation process.

7. The vehicle control device according to claim 4, wherein:

    the towing process includes a process of operating the steering system in accordance with a value of the operation input variable determined such that a force needed for a driver to operate an input unit becomes greater when the tractor is towing the trailer compared to when the tractor is not towing the trailer; and
    the input unit is an interface through which a steering intention of a driver is input.

8. The vehicle control device according to claim 7, wherein:

    the steering system is a system in which the input unit and a steered wheel are mechanically connected, and includes a motor configured to assist in steering of the steered wheel; and
    the towing process includes a process of controlling an absolute value of torque of the motor to a smaller value when the tractor is towing the trailer compared to when the tractor is not towing the trailer.

9. The vehicle control device according to claim 4, wherein:

the steering system includes a rear-wheel actuator configured to steer a steered wheel that is a rear wheel of the tractor;
the towing process includes a process of setting a value of a rear-wheel steered angle variable in accordance with a value of a front-wheel steered angle variable and operating the rear-wheel actuator in accordance with the value of the rear-wheel steered angle variable;
the front-wheel steered angle variable is a variable indicating a target value of a steered angle of a front wheel of the tractor; and
the rear-wheel steered angle variable is the operation input variable and a variable indicating a target value of a steered angle of the rear wheel.

10. The vehicle control device according to claim 1, wherein the towing process includes a process of operating either or both of the braking system and the drive system such that a magnitude of drive force of an outer wheel of the tractor relative to drive force of an inner wheel of the tractor during turning of the tractor is made smaller compared to when the tractor is not towing the trailer.

11. The vehicle control device according to claim 1, wherein:

the control device is configured to execute a trailer information acquisition process of acquiring trailer information;
the trailer information is information indicating at least one of the following three: a position of a center of gravity of the trailer, a total weight of the trailer, and a length of the trailer; and
the towing process is a process of operating the operation target in accordance with a value of the operation input variable determined in accordance with the trailer information.

12. A vehicle control method for controlling a vehicle equipped with a tractor, the vehicle control method comprising:

executing a towing information acquisition process; and
executing a towing process, wherein:

the towing information acquisition process is a process of acquiring information regarding whether the tractor is towing a trailer;
the towing process is a process of operating an operation target in accordance with a value of an operation input variable determined so as to attenuate a yaw response of the vehicle to a turning instruction operation when the tractor is towing the trailer compared to when the tractor is not towing the trailer;
the operation target is at least one of the following three systems: a steering system, a drive system, and a braking system; and
the operation input variable is a variable that determines an input signal to the operation target.

13. A vehicle control program that controls a vehicle equipped with a tractor, the vehicle control program comprising a command to cause a computer to execute a towing information acquisition process and a towing process, wherein:

the towing information acquisition process is a process of acquiring information regarding whether the tractor is towing a trailer;
the towing process is a process of operating an operation target in accordance with a value of an operation input variable determined so as to attenuate a yaw response of the vehicle to a turning instruction operation when the tractor is towing the trailer compared to when the tractor is not towing the trailer;
the operation target is at least one of the following three systems: a steering system, a drive system, and a braking system; and
the operation input variable is a variable that determines an input signal to the operation target.

Fig.1

Fig.2

VEHICLE SPEED SENSOR ~112
TRACTOR-SIDE YAW RATE SENSOR ~114
USER INTERFACE ~116
BRAKING SYSTEM ~102
DRIVE SYSTEM ~100

90
PU ~92
94 ~94a
ASSIST PROGRAM

50
52
85
86
θh
54
56
80
84 ~84a
STEERING CONTROL PROGRAM
82
PU
MS
MSf
θmf
87
Af
60
62
MSr
θmr
88
Ar
64
66
22
24

Th
v
rt

# Fig.3

START

INPUT OPERATION? ~S10
- NO
- YES

TRAILER CONNECTED? ~S12
- NO
- YES

TRAILER TOWING MODE ~S14

TRACTOR-ONLY MODE ~S16

OUTPUT MODE INFORMATION ~S18

TRAILER INFORMATION INPUT? ~S20
- NO
- YES

OUTPUT TRAILER INFORMATION ~S22

END

START

MODE INFORMATION (TRAILER INFORMATION) RECEIVED? ~S30
- NO
- YES

STORE MODE INFORMATION (TRAILER INFORMATION) ~S32

END

# Fig.4

```
                    START

                         S40
        NO
  ┌───────────  MANUAL STEERING MODE?
  │                      │ YES
  │                      │        S42
  │          ACQUIRE STEERING ANGLE θh
  │            AND VEHICLE SPEED V
  │                      │
  │                      │      S44
  │            CALCULATE θfb*(θh)
  │                      │
  │                      │      S46
  │                                              NO
  │            TRAILER TOWING MODE? ──────────────┐
  │                      │ YES                     │
  │                      │      S48                │
  │          ACQUIRE TRACTOR YAW RATE rt          │
  │                      │                         │
  │                      │      S50                │
  │            SELECT MAP DATA FOR Ka             │
  │                      │                         │
  │                      │      S52                │
  │      CALCULATE CORRECTION AMOUNT Δθf          │
  │                                                │
  │             1+Ka(V)・s・T                       │
  │      Δθf ← ───────────── ・rt                  │
  │               1+s・T                            │
  │                      │                         │
  │                      │   S54             S56   │
  │          θf*←θfb*−Δθf        θf*←θfb* ◄────────┘
  │                      │                │
  │                      └──────◄─────────┘
  │                      │      S58
  │               ACQUIRE θf
  │                      │      S60
  │               CALCULATE Tf*
  │                      │      S62
  │               OUTPUT MSf
  │                      │
  └──────────────────────┤
                    END
```

# Fig.5

```
                    ┌──────────────┐
                    │    START     │
                    └──────┬───────┘
                           │        ～S40a
          NO   ╱───────────┴────────────╲
        ┌──────┤ AUTOMATIC STEERING MODE? │
        │      ╲──────────┬──────────────╱
        │                 │ YES
        │                 │      ～S42a
        │      ┌──────────┴──────────────┐
        │      │ ACQUIRE θfb* AND VEHICLE SPEED V │
        │      └──────────┬──────────────┘
        │                 │      ～S46
        │      ╱──────────┴──────────╲    NO
        │     ╱  TRAILER TOWING MODE?  ╲──────┐
        │     ╲──────────┬────────────╱       │
        │                │ YES                │
        │                │      ～S48          │
        │      ┌─────────┴──────────────┐     │
        │      │ ACQUIRE TRACTOR YAW RATE rt │  │
        │      └─────────┬──────────────┘     │
        │                │      ～S50          │
        │      ┌─────────┴──────────────┐     │
        │      │ SELECT MAP DATA FOR Ka  │     │
        │      └─────────┬──────────────┘     │
        │                │      ～S52          │
        │      ┌─────────┴──────────────┐     │
        │      │ CALCULATE CORRECTION AMOUNT Δθf │
        │      │                         │     │
        │      │           1+Ka(V)·s·T   │     │
        │      │ Δθf ← ───────────── ·rt │     │
        │      │            1+s·T        │     │
        │      └─────────┬──────────────┘     │
        │          ～S54  │                ～S56│
        │      ┌─────────┴──────┐  ┌──────────┴──────┐
        │      │ θf* ← θfb*−Δθf  │  │  θf* ← θfb*     │
        │      └─────────┬──────┘  └──────────┬──────┘
        │                │←──────────────────┘
        │                │      ～S58
        │      ┌─────────┴──────┐
        │      │  ACQUIRE θf     │
        │      └─────────┬──────┘
        │                │      ～S60
        │      ┌─────────┴──────┐
        │      │  CALCULATE Tf*  │
        │      └─────────┬──────┘
        │                │      ～S62
        │      ┌─────────┴──────┐
        │      │  OUTPUT MSf     │
        │      └─────────┬──────┘
        └────────────────┤
                    ┌────┴─────┐
                    │   END    │
                    └──────────┘
```

**Fig.6**

Flowchart:

START → S40 MANUAL STEERING MODE? 
- NO → END
- YES → S42 ACQUIRE STEERING ANGLE θh AND VEHICLE SPEED V
→ S44a CALCULATE θf*(θh)
→ S46 TRAILER TOWING MODE?
  - NO → S58 ACQUIRE θf → S60 CALCULATE Tf* → S62 OUTPUT MSf → END
  - YES → S70 SET MAP FOR GAIN G → S74 θr*←G(V)·θf* → S76 ACQUIRE θf AND θr → S78 CALCULATE Tf* AND Tr* → S80 OUTPUT MSf AND MSr → END

## Fig.7

```
              ┌──────────────┐
              │    START     │
              └──────┬───────┘
                     │         ~S46
          ┌──────────▼──────────────┐
  NO ◄────┤  TRAILER TOWING MODE?   │
          └──────────┬──────────────┘
                   YES │          ~S90
          ┌──────────▼──────────────┐
          │ SELECT MAP DATA FOR ωhth │
          └──────────┬──────────────┘
                     │            ~S92
          ┌──────────▼──────────────┐
          │  ACQUIRE VEHICLE SPEED V │
          └──────────┬──────────────┘
                     │            ~S94
          ┌──────────▼──────────────┐
  NO ◄────┤    |ωh|≧ωhth(V) ?       │
          └──────────┬──────────────┘
                   YES │          ~S96
          ┌──────────▼──────────────────┐
          │  SET DRIVE FORCE DIFFERENCE  │
          │ BETWEEN INNER AND OUTER WHEELS│
          └──────────┬──────────────────┘
                     │            ~S98
          ┌──────────▼──────────────┐
          │   OPERATE BRAKING SYSTEM │
          │     AND DRIVE SYSTEM     │
          └──────────┬──────────────┘
                     │
              ┌──────▼───────┐
              │     END      │
              └──────────────┘
```

# Fig.8

# Fig.9

```
                    ┌──────────────┐
                    │    START     │
                    └──────┬───────┘
                           │  ⌒S100
                ┌──────────▼──────────────┐
                │  ACQUIRE VEHICLE SPEED V,│
                │    STEERING ANGLE θh,    │
                │  AND STEERING TORQUE Th  │
                └──────────┬──────────────┘
                           │  ⌒S102
                ┌──────────▼──────────────┐
                │   ACQUIRE Taf (n - 1)    │
                └──────────┬──────────────┘
                           │  ⌒S104
                ┌──────────▼──────────────┐
                │      CALCULATE Thb*      │
                └──────────┬──────────────┘
                           │  ⌒S106
              ╱────────────▼──────────────╲    NO
              ╲   TRAILER TOWING MODE?     ╱───────────┐
               ╲──────────┬───────────────╱            │
                      YES │                            │
                          │  ⌒S108                     │
                ┌─────────▼───────────────┐            │
                │    SET MAP FOR GAIN Kt   │            │
                └─────────┬───────────────┘            │
                          │  ⌒S110                     │  ⌒S112
                ┌─────────▼───────────────┐   ┌────────▼────────┐
                │    Th*←Kt (V) · Thb*     │   │   Th*←Thb*      │
                └─────────┬───────────────┘   └────────┬────────┘
                          │◄───────────────────────────┘
                          │  ⌒S114
                ┌─────────▼───────────────┐
                │       CALCULATE Ts       │
                └─────────┬───────────────┘
                          │  ⌒S116
                ┌─────────▼───────────────┐
                │       Taf←Ts+Th          │
                └─────────┬───────────────┘
                          │  ⌒S118
                ┌─────────▼───────────────┐
                │       CALCULATE Ta       │
                └─────────┬───────────────┘
                          │  ⌒S120
                ┌─────────▼───────────────┐
                │        OUTPUT MSa        │
                └─────────┬───────────────┘
                          │
                    ┌─────▼──────┐
                    │    END     │
                    └────────────┘
```

## INTERNATIONAL SEARCH REPORT

| International application No. |
| --- |
| **PCT/JP2024/024310** |

| A. | CLASSIFICATION OF SUBJECT MATTER |
| --- | --- |

***B60W 30/02***(2012.01)i; ***B60W 40/10***(2012.01)i; ***B60W 40/12***(2012.01)i; ***B62D 53/00***(2006.01)i
FI: B60W30/02; B60W40/10; B60W40/12; B62D53/00 B

According to International Patent Classification (IPC) or to both national classification and IPC

| B. | FIELDS SEARCHED |
| --- | --- |

Minimum documentation searched (classification system followed by classification symbols)

B60W30/02; B60W40/10; B60W40/12; B62D53/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-124962 A (TOYOTA JIDOSHA KABUSHIKI KAISHA) 20 August 2020 (2020-08-20) | 1-4, 7-8, 11-13 |
| | abstract, paragraphs [0012], [0015], [0035], [0043], fig. 2-4 | |
| Y | | 1, 5-6, 9-11 |
| X | JP 2006-185376 A (NISSAN MOTOR CO., LTD.) 13 July 2006 (2006-07-13) | 1-2, 4, 7-8, 12-13 |
| | claims 1-2, paragraphs [0037]-[0039], [0064], fig. 9-10 | |
| Y | | 1, 5-6, 9-11 |
| Y | WO 2020/095788 A1 (HITACHI AUTOMOTIVE SYSTEMS, LTD.) 14 May 2020 (2020-05-14) | 5-6 |
| | paragraphs [0009]-[0053], fig. 1-8 | |
| Y | JP 8-150951 A (MITSUBISHI JIDOSHA KOGYO KABUSHIKI KAISHA) 11 June 1996 (1996-06-11) | 9 |
| | abstract, paragraphs [0037]-[0038] | |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 August 2024** | **03 September 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

International application No.

**PCT/JP2024/024310**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2023-3050 A (JTEKT CORP.) 11 January 2023 (2023-01-11) paragraphs [0105]-[0107] | 1, 10 |
| Y | JP 2006-527359 A (DAIMLERCHRYSLER AG) 30 November 2006 (2006-11-30) paragraphs [0017]-[0018], [0043], [0045]-[0046] | 11 |

Form PCT/ISA/210 (second sheet) (July 2022)

## INTERNATIONAL SEARCH REPORT
### Information on patent family members

| International application No. |
|---|
| **PCT/JP2024/024310** |

| Patent document cited in search report | | | Publication date (day/month/year) | Patent family member(s) | Publication date (day/month/year) |
|---|---|---|---|---|---|
| JP | 2020-124962 | A | 20 August 2020 | (Family: none) | |
| JP | 2006-185376 | A | 13 July 2006 | US 2006/0217887 A1 claims 1-2, paragraphs [0079]-[0083], [0127]-[0128], fig. 9-10<br>EP 1676763 A1<br>CN 1796206 A | |
| WO | 2020/095788 | A1 | 14 May 2020 | US 2022/0001921 A1 paragraphs [0017]-[0115], fig. 1-8<br>DE 112019005571 B4<br>CN 112955364 A | |
| JP | 8-150951 | A | 11 June 1996 | (Family: none) | |
| JP | 2023-3050 | A | 11 January 2023 | WO 2022/270322 A1<br>CN 117545678 A | |
| JP | 2006-527359 | A | 30 November 2006 | US 2006/0244579 A1 paragraphs [0015]-[0016], [0044], [0046]-[0047]<br>WO 2004/109326 A1<br>DE 10326190 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190001944